# EUROPÄISCHE PATENTSCHRIFT

(11) **EP 0 480 390 B1**
(45) Veröffentlichungstag und Bekanntmachung des Hinweises auf die Patenterteilung: **16.07.1997**
(21) Anmeldenummer: 91117170.0
(22) Anmeldetag: 09.10.1991
(51) Int. Cl.: C08F 10/00, C08F 4/602

(54) **Verfahren zur Herstellung eines Polyolefins**
Process for preparing a polyolefin
Procédé de préparation d'une polyoléfine

(30) Priorität: 11.10.1990 DE 4032266
(43) Veröffentlichungstag der Anmeldung: 15.04.1992
(73) Patentinhaber: HOECHST AKTIENGESELLSCHAFT, 65926 Frankfurt am Main (DE)
(72) Erfinder: Dolle, Volker, Dr., W-6233 Kelkheim (Taunus) (DE); Herrmann, Hans-Friedrich, Dr., W-6100 Darmstadt (DE); Winter, Andreas, Dr., W-6246 Glashütten (DE); Spaleck, Walter, Dr., W-6237 Liederbach (DE)

(56) Entgegenhaltungen:
- EP-A- 0 328 348
- EP-A- 0 367 503
- EP-A- 0 372 617
- WO-A-91/05810

## Beschreibung

Die Erfindung betrifft ein umweltfreundliches Verfahren zur Olefinpolymerisation, bei dem durch die Wahl eines speziellen Katalysator -/Cokatalysatorsystems auf die Verwendung von aromatischen Lösemitteln verzichtet werden kann.

Die Verwendung von Metallocenen als Katalysatoren bei der Herstellung von Olefinpolymeren in Verbindung mit Aluminoxancokatalysatoren ist bekannt. Als Cokatalysator wird dabei bevorzugt Methylaluminoxan eingesetzt (vgl. EP-A 185 918). Man erhält so Polyolefine mit hoher Taktizität und enger Molmassenverteilung. Zur Steuerung der Isotaxie oder Syndiotaxie des gewünschten Polymers kann ein Methylaluminoxan verwendet werden, bei dem die Methylgruppen bis zu 40 % durch Wasserstoff ersetzt sind (vgl. EP-A 421 209).

Aus EP-A 372 617 ist ein Verfahren zur Herstellung eines Methylaluminoxans bekannt, wobei Tetraalkyldialuminoxan, welches C₂-oder höhere Alkylgruppen enthält mit Trimethylaluminium umgesetzt wird.

Bei den genannten Verfahren wird bei der Herstellung des jeweiligen Aluminoxans ein aromatisches Lösungsmittel, bevorzugt Toluol, verwendet, bzw. das als Cokatalysator dienende Aluminoxan wird als toluolische Lösung in den Polymerisationskessel eingebracht. Um die Aktivität des eingesetzten Metallocens zu erhöhen, findet häufig eine spezielle Voraktivierungsmethode Anwendung (EP-A 302 424). Dabei wird das Metallocen wiederum in einer toluolischen Lösung des entsprechenden Aluminoxans gelöst und in dieser Form als Katalysator für die Olefinpolymerisation eingesetzt. Die Verwendung von z.B. aliphatischen Lösemitteln scheidet aus, da diese mit den oben erwähnten Aluminoxanen keine stabilen Lösungen bilden. Aromatische Lösemittel wie Toluol sind jedoch aus ökologischer als auch aus toxikologischer Sicht nicht unbedenklich (MAK-Wert). Geringe Restmengen solcher Lösemittel sind im gebildeten Polyolefin enthalten und müssen möglichst vollständig entfernt werden, da sie z.B. die Polymereigenschaften nachteilig beeinflussen können (Weichmacher). Darüberhinaus besitzen die nach den beschriebenen Verfahren herstellbaren Polyolefine, insbesondere Polypropylen und dessen Copolymere, als Verpackungsmaterial in der Lebensmittelindustrie Bedeutung. Solche Verpackungsmaterialien sollten möglichst nicht mit aromatischen Lösemitteln in Berührung gekommen sein.

Es bestand die Aufgabe, ein Verfahren zur Herstellung von Polyolefinen mit hoher Taktizität, großer Molmasse und enger Molmassenverteilung zu finden, bei dem ohne Einbußen bei der Katalysatoraktivität auf den Einsatz von aromatischen Lösemitteln verzichtet werden kann.

Diese Aufgabe wird erfindungsgemäß dadurch gelöst, daß die Polymerisation von Olefinen in Gegenwart bestimmter Metallocen-Katalysatoren und speziell ausgewählter Aluminoxane als Cokatalysatoren durchgeführt wird.

Die vorliegende Erfindung betrifft somit ein Verfahren zur Herstellung eines Polyolefins durch Homo- oder Copolymerisation eines Olefins der Formel R^{a}-CH=CH-R^{b}, worin R^{a} und R^{b} gleich oder verschieden sind und ein Wasserstoffatom oder einen C₁-C₁₄-Alkylrest bedeuten oder R^{a} und R^{b} mit den sie verbindenden C-Atomen einen Ring mit 4 bis 28 C-Atomen bilden, bei einer Temperatur von 0°C bis 150°C, bei einem Druck von 0,5 bis 100 bar, in Lösung, in Suspension oder in der Gasphase, in Gegenwart eines Katalysators, welcher aus einem Metallocen und einem Aluminoxan besteht, dadurch gekennzeichnet, daß das Aluminoxan eine Verbindung der Formel (I) 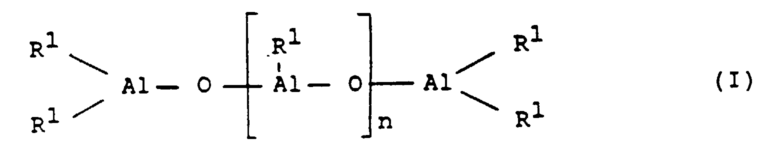 für den linearen Typ und/oder der Formel (II) 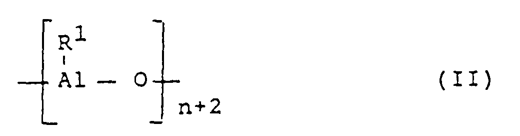 für den cyclischen Typ ist, wobei in den Formeln (I) und (II) R¹ Methyl oder iso-Butyl bedeutet und n eine ganze Zahl von 2 bis 50 ist, wobei 0,01 bis 40 % der Reste R¹ iso-Butyl sind.

Der Buchstabe n ist bevorzugt eine Zahl von 5 bis 40. Vorzugsweise entsprechen 0,01 bis 35 %, insbesondere 3-12 %, der Reste R¹ einer iso-Butyl-Gruppe.

Gegenstand der Erfindung ist ferner die Verwendung der erfindungsgemäßen Aluminoxane als Cokatalysatoren bei der Herstellung von Polyolefinen nach dem genannten Verfahren.

Die exakte Struktur der Aluminoxane ist nicht bekannt, und insofern ist auch das jeweilige Herstellungsverfahren zu ihrer Charakterisierung heranzuziehen. Für den erfindungsgemäßen Zweck als Cokatalysator können auch Mischungen verschiedener Aluminoxane verwendet werden.

Die Herstellung der Verbindung I und II kann auf verschiedene Art und Weise erfolgen.

Eine Möglichkeit ist die vorsichtige Zugabe von Wasser zu einer verdünnten Lösung eines Gemisches von AlMe₃ und AlR₃ (Me=Methyl, R= iso-Butyl), indem diese Lösung und das Wasser jeweils in kleinen Portionen in eine vorgelegte größere Menge eines inerten Lösemittels eingetragen werden und zwischendurch das Ende der Gasentwicklung jeweils abgewartet wird. Das Verhältnis AlMe₃:AlR₃ ist entsprechend der Zusammensetzung des gewünschten Aluminoxans zu wählen.

Bei einem anderen Verfahren wird fein gepulvertes Kupfersulfatpentahydrat in Benzin aufgeschlämmt und in einem Glaskolben unter Inertgas bei etwa -20°C mit soviel AlMe₃ + AlR₃ versetzt, daß für je 4 Al-Atome etwa 1 mol CuSO₄·5H₂O zur Verfügung steht. Nach langsamer Hydrolyse unter Alkanabspaltung wird die Reaktionsmischung 24 bis 48 Stunden bei Zimmertemperatur belassen, wobei gegebenenfalls gekühlt werden muß, damit die Temperatur nicht über 30°C ansteigt. Anschließend wird das im Benzin gelöste Aluminoxan von dem Kupfersulfat abfiltriert und die Lösung im Vakuum eingeengt. Es wird angenommen, daß bei diesem Herstellungsverfahren die niedermolekularen Aluminoxane zu höheren Oligomeren kondensieren. Die Lösung kann auch als solche verwendet werden.

Weiterhin erhält man die erfindungsgemäßen Aluminoxane, wenn man bei einer Temperatur von -20 bis 100°C in einem inerten aliphatischen Lösemittel, vorzugsweise Heptan oder eine Benzinfraktion mit einem Siedebereich von 100-120°C bzw. 140-170°C, ein Gemisch aus AlMe₃+AlR₃ (bevorzugt Al(i-Butyl)₃) mit kristallwasserhaltigen Aluminiumsalzen, vorzugsweise Aluminiumsulfat, zur Reaktion bringt. Dabei beträgt das Volumenverhältnis zwischen Lösemittel und den verwendeten Aluminiumalkylen 1:1 bis 50:1 - vorzugsweise 5:1 - und die Reaktionszeit, die durch Abspaltung der Alkane kontrolliert werden kann, 1 bis 200 Stunden vorzugsweise 10 bis 40 Stunden.

Von den kristallwasserhaltigen Aluminiumsalzen werden insbesondere jene verwendet, die einen hohen Gehalt an Kristallwasser aufweisen. Besonders bevorzugt ist Aluminiumsulfat-Hydrat, vor allem die Verbindungen Al₂(SO₄)₃·16H₂O und Al₂(SO₄)₃·18H₂O mit dem besonders hohen Kristallwassergehalt von 16 bzw. 18 mol H₂O/mol Al₂(SO₄)₃.

Eine weitere Variante zur Herstellung von Aluminoxanen besteht darin, ein Gemisch aus AlMe₃+AlR₃ in dem im Polymerisationskessel vorgelegten Suspensionsmittel, vorzugsweise im flüssigen Monomeren, in Heptan oder einer Benzinfraktion, zu lösen und dann die Aluminiumverbindungen mit Wasser umzusetzen.

Es ist prinzipiell auch möglich, das erfindunsgemäße Aluminoxan aus einem entsprechenden Aluminiumtrialkyl mit unterschiedlichen Alkylsubstituenten, wie z.B. AlMe₂R, nach den obengenannten Verfahren zu erhalten. Auch können mehr als zwei verschiedene Aluminiumtrialkyle als Ausgangssubstanzen dienen. Neben diesen gibt es weitere literaturbekannte Verfahren, die zur Herstellung der Aluminoxane geeignet sind.

Sowohl bei den genannten Verfahren zur Gewinnung der Aluminoxane als auch bei der noch zu beschreibenden Methode zur Voraktivierung des Metallocenkatalysators werden erfindungsgemäß als Lösemittel keine aromatischen Verbindungen verwendet. Geeignet sind z.B. Alkane der Formel CₘH₂ₘ₊₂ mit m ≥ 6 oder sogenannte technische Benzin- oder Dieselölfraktionen mit einem Siedebereich von z.B. 100-120°C oder 140-170°C. Besonders zu nennen sind hierbei die ®Exsol-Typen (Fa. Exxon Chemicals). Auch die fertigen Katalysatorlösungen, welche im Polymerisationsprozeß eingesetzt werden, enthalten diese aliphatischen Lösemittel.

Als Metallocen sind verschiedene Verbindungen dieses Typs verwendbar, beispielsweise Verbindungen der Formel III

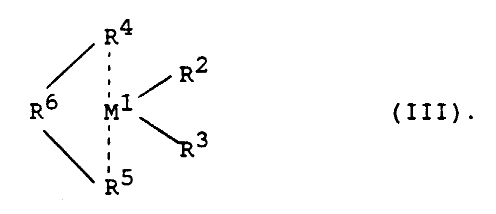

In Formel III ist M¹ ein Metall aus der Gruppe Titan, Zirkon, Hafnium, Vanadium, Niob, Tantal und Chrom, vorzugsweise Zirkon und Hafnium.

R² und R³ sind gleich oder verschieden und bedeuten ein Wasserstoffatom, eine C₁-C₁₀-, vorzugsweise
C₁-C₃-Alkylgruppe, eine C₁-C₁₀-, vorzugsweise
C₁-C₃-Alkoxygruppe, eine C₆-C₁₀-, vorzugsweise
C₆-C₈-Arylgruppe, eine C₆-C₁₀-, vorzugsweise
C₆-C₈-Aryloxygruppe, eine C₂-C₁₀-, vorzugsweise
C₂-C₄-Alkenylgruppe, eine C₇-C₄₀-, vorzugsweise
C₇-C₁₀-Arylalkylgruppe, eine C₇-C₄₀-, vorzugsweise
C₇-C₁₂-Alkylarylgruppe, eine C₈-C₄₀-, vorzugsweise
C₈-C₁₂-Arylalkenylgruppe oder ein Halogenatom, vorzugsweise Chlor.

R⁴ und R⁵ sind gleich oder verschieden und bedeuten einen ein- oder mehrkernigen Kohlenwasserstoffrest, welcher mit dem Zentralatom M¹ eine Sandwichstruktur bilden kann.

Bevorzugt sind R⁴ und R⁵ Fluorenyl, Indenyl und Cyclopentadienyl, wobei die Grundkörper noch zusätzliche Substituenten tragen können.

R⁶ ist eine ein- oder mehrgliedrige Brücke, welche die Reste R⁴ und R⁵ verknüpft und bedeutet 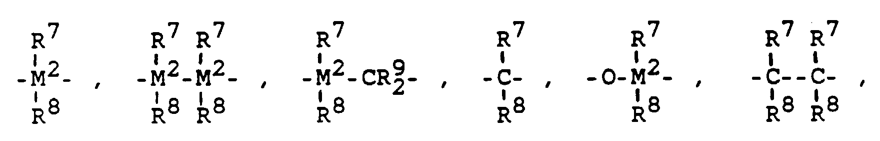 = BR⁷, = AlR⁷, -Ge-, -Sn-, -O-, -S-,= SO, = SO₂, = NR⁷, = CO, = PR⁷ oder = P(O)R⁷ ist, wobei R⁷, R⁸ und R⁹ gleich oder verschieden sind und ein Wasserstoffatom, ein Halogenatom, vorzugsweise Chlor, eine C₁-C₁₀-, vorzugsweise C₁-C₃-Alkylgruppe, insbesondere Methylgruppe, eine C₁-C₁₀-Fluoralkylgruppe, vorzugsweise CF₃-Gruppe, eine C₆-C₁₀-Fluorarylgruppe, vorzugsweise Pentafluorphenylgruppe, eine C₆-C₁₀-, vorzugsweise C₆-C₈-Arylgruppe, eine C₁-C₁₀-, vorzugsweise C₁-C₄-Alkoxygruppe, insbesondere Methoxygruppe, eine C₂-C₁₀-, vorzugsweise C₂-C₄-Alkenylgruppe, eine C₇-C₄₀-vorzugsweise C₇-C₁₀-Arylalkylgruppe, eine C₈-C₄₀-, vorzugsweise C₈-C₁₂-Arylalkenylgruppe, eine C₇-C₄₀-, vorzugsweise C₇-C₁₂-Alkylarylgruppe oder den Rest -CH₂-M²(CH₃)₃ bedeuten, oder R⁶ und R⁷ oder R⁶ und R⁸ bilden jeweils zusammen mit den sie verbindenden Atomen einen Ring.

M² ist Silizium, Germanium oder Zinn, bevorzugt Silizium oder Germanium.

R⁶ ist vorzugsweise =CR⁷R⁸, =SiR⁷R⁸, =GeR⁷R⁸, -O-, -S-, =SO, =PR⁷ oder =P(O)R⁷.

Diese Metallocene sind chiral. Für den erfindungsgemäßen Zweck als Katalysator sind sowohl das Racemat als auch die jeweiligen Enantiomeren geeignet. Die letztgenannten Verbindungen lassen sich nach bekannten Methoden zur Racematspaltung erhalten.

Die vorstehend beschriebenen Metallocene lassen sich nach folgendem allgemeinen Reaktionsschema herstellen: 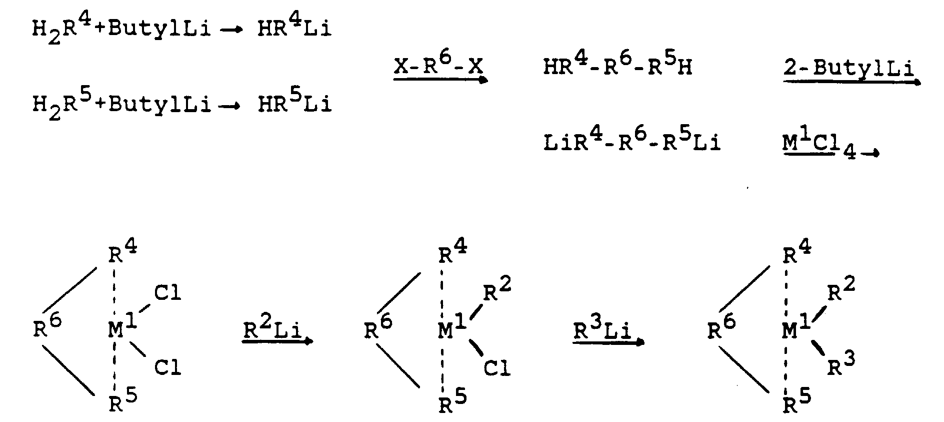 (X = Cl, Br, J, O-Tosyl)
oder

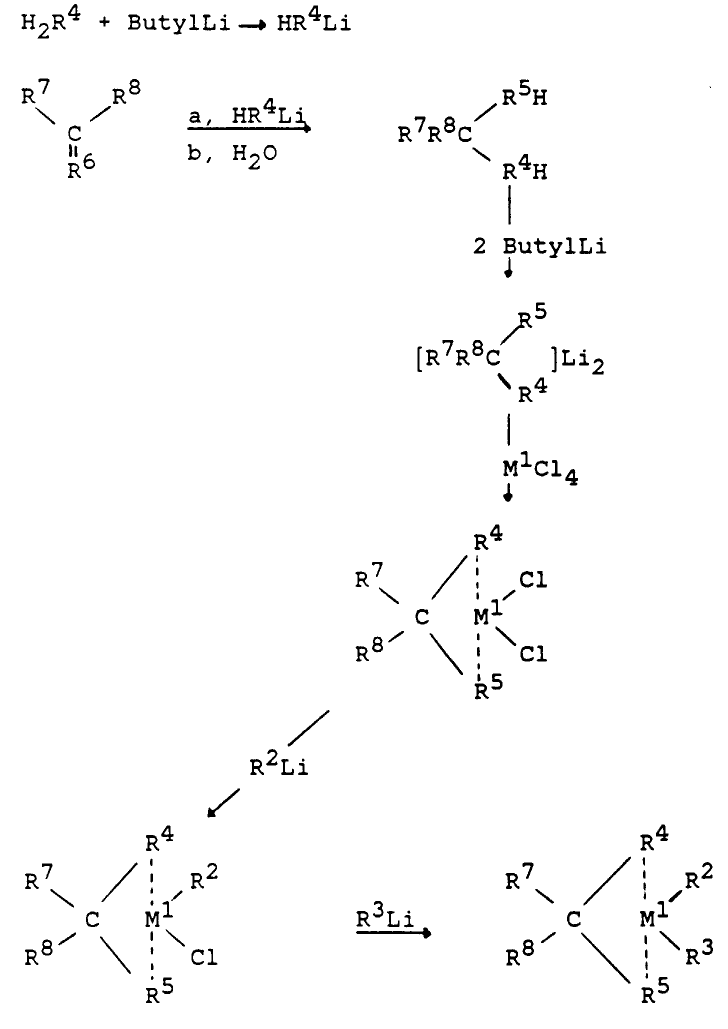

Geeignete Metallocene sind beispielsweise Bisindenylethylen-zirkondichlorid, Bisindenyl-ethylen-hafniumdichlorid, Bisindenyl-dimethylsilylen-zirkondichlorid, Bisindenyldimethylsilylen-hafniumdichlorid, ferner (Arylalkyliden)-(9-fluorenyl)(cyclopentadienyl)zirkondichlorid,(Diarylmethylen)(9-fluorenyl)(cyclopentadienyl)zirkondichlorid und (Dialkylmethylen)(9-fluorenyl)(cyclopentadienyl)-zirkondichlorid, sowie die entsprechenden Hafniumverbindungen.

Als besonders geeignete Katalysatoren für das erfindungsgemäße Verfahren sind die in den Ausführungsbeispielen aufgeführten Metallocene zu nennen.

Es ist möglich, das Metallocen vor dem Einsatz in der Polymerisationsreaktion mit einem Aluminoxan der Formel (I) und/oder (II) vorzuaktivieren. Dadurch wird die Polymerisationsaktivität deutlich erhöht und die Kornmorphologie des Polymeren verbessert.

Die Voraktivierung der Übergangsmetallverbindung wird in Lösung vorgenommen. Bevorzugt wird dabei das Metallocen in einer Lösung des Aluminoxans in einem der bereits genannten inerten Lösemittel gelöst.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Das Metallocen kann in der gleichen Konzentration eingesetzt werden, vorzugsweise wird es jedoch in einer Menge von 10⁻⁴ - 1 mol pro mol Aluminoxan eingesetzt. Die Voraktivierungszeit beträgt 5 Minuten bis 60 Stunden, vorzugsweise 5 bis 60 Minuten. Man arbeitet bei einer Temperatur von -78 °C bis 100 °C, vorzugsweise 0 bis 70°C.

Die Polymerisation wird in bekannter Weise in Lösung, in Suspension oder in der Gasphase, kontinuierlich oder diskontinuierlich, ein- oder mehrstufig bei einer Temperatur von 30 bis 150 °C, vorzugsweise 30 bis 80 °C, durchgeführt. Polymerisiert werden Olefine der Formel R^{a}-CH=CH-R^{b} bzw. deren Gemische zur Herstellung von Copolymeren. In dieser Formel sind R^{a} und R^{b} gleich oder verschieden und bedeuten ein Wasserstoffatom oder einen Alkylrest mit 1 bis 28 C-Atomen. R^{a} und R^{b} können jedoch auch mit den sie verbindenden C-Atomen einen Ring mit 4 bis 28 C-Atomen bilden. Beispiele für solche Olefine sind Ethylen, Propylen, 1-Buten, 1-Hexen, 4-Methyl-1-penten, 1-Octen, Norbornen, Norbornadien, Penten, Hexen oder Octen. Insbesondere wird Propylen polymerisiert.

Dabei wird die Metallocenverbindung in einer Konzentration, bezogen auf das Übergangsmetall, von 10⁻³ bis 10⁻⁷, vorzugsweise 10⁻⁴ bis 10⁻⁶ mol Übergangsmetall pro dm³ Lösemittel bzw. pro dm³ Reaktorvolumen angewendet. Das Aluminoxan wird in einer Konzentration von 10⁻⁵ bis 10⁻¹ mol, vorzugsweise 10⁻⁴ bis 10⁻² mol pro dm³ Lösemittel bzw. pro dm³ Reaktorvolumen verwendet. Prinzipiell sind aber auch höhere Konzentrationen möglich. Als Metallocen wird mindestens eine Verbindung der Formel III eingesetzt. Möglich sind auch Gemische mehrerer Verbindungen der Formel III oder Gemische von Isomeren.

Als Molmassenregler wird, falls erforderlich, Wasserstoff zugegeben. Der Gesamtdruck im Polymerisationssystem beträgt 0,5 bis 100 bar. Bevorzugt ist die Polymerisation in dem technisch besonders interessanten Druckbereich von 2 bis 64 bar.

Wenn die Polymerisation als Suspensions- oder Lösungspolymerisation durchgeführt wird, wird ein für das Ziegler-Niederdruckverfahren gebräuchliches inertes Lösemittel verwendet. Beispielsweise arbeitet man in einem aliphatischen oder cycloaliphatischen Kohlenwasserstoff; als solcher sei beispielsweise Butan, Pentan, Hexan, Heptan, Isooctan, Cyclohexan, Methylcyclohexan genannt.

Weiterhin kann eine Benzin- bzw. hydrierte Dieselölfraktion benutzt werden. Bevorzugt wird im flüssigen Monomeren polymerisiert.
Werden inerte Lösemittel verwendet, werden die Monomeren gasförmig oder flüssig zudosiert.
Wird nur ein Monomer als Suspensionsmittel verwendet, so wird das Comonomere, beziehungsweise werden die Comonomeren gasförmig oder flüssig zudosiert.
Des weiteren ist es möglich, in einer Mischung verschiedener Monomeren als Suspensionsmittel zu polymerisieren; ein weiteres Monomeres kann dann flüssig oder gasförmig zudosiert werden. Bei Verwendung von Ethylen ist es vorteilhaft, einen Teil des Ethylens vorzulegen und den Rest während der Polymerisation zuzudosieren.

Die Dauer der Polymerisation ist beliebig, da das erfindungsgemäß zu verwendende Katalysatorsystem einen nur geringen zeitabhängigen Abfall der Polymerisationsaktivität zeigt.

Das erfindungsgemäße Verfahren zeichnet sich ferner dadurch aus, daß die verwendeten Metallocene sehr temperaturstabil sind, so daß sie mit hoher Aktivität auch bei Temperaturen bis 90°C eingesetzt werden können. Außerdem können die als Cokatalysatoren dienenden Aluminoxane in geringeren Konzentrationen als bisher zugesetzt werden. Schließlich ist es nunmehr möglich, Aluminoxane ohne aromatische Lösemittel zu verwenden.

Die nachfolgenden Beispiele sollen die Erfindung erläutern. Es bedeuten
- SI =: Syndiotaktischer Index, bestimmt durch ¹³C-NMR-Spektroskopie
- II =: Isotaktischer Index, bestimmt durch ¹³C-NMR-Spektroskopie
- M_{w} =: Molmassengewichtsmittel [g/mol]; die Molmassen wurden mit Gelpermeationschromatographie bestimmt
- M_{w}/Mₙ =: Polydispersität

### Beispiel 1

Ein trockener 16 dm³ Kessel wurde mit Stickstoff gespült und mit 10 dm³ flüssigem Propylen befüllt. Dann wurden 35 cm³ Iso-butyl-methyl-aluminoxan, gelöst in Heptan (= RMAO, entsprechend 40 mmol Al, mittlerer Oligomerisierungsgrad n = 30, ca. 10 % der Reste R¹ = Isobutyl), zugegeben und der Ansatz bei 30°C 15 Minuten gerührt.

Parallel dazu wurden 3,8 mg (Ind)₂SiMe₂ZrCl₂ in 17,5 cm³ RMAO (= 20 mmol Al) gelöst und durch 15-minütiges Stehenlassen oder Rühren voraktiviert.

Diese Lösung wurde dann in den Kessel gegeben. Das Polymerisationssystem wurde auf eine Temperatur von 70°C gebracht und die Polymerisation startete. Die Polymerisation wurde nach 60 Minuten durch Abkühlen des Reaktors und Entspannen gestoppt. Es wurden 1,5 kg Polypropylen erhalten. Die Aktivität betrug somit 400 kg PP/g Metallocen/h.

Am Polymeren wurden die folgenden analytischen Daten ermittelt:
M_{w} = 52000 g/mol, M_{w}/Mₙ = 2,1, II = 92 %.

Analog zu dieser Verfahrensvorschrift wurden die folgenden Beispiele 2-12 durchgeführt, deren Ergebnisse in nachstehender Tabelle wiedergegeben sind.

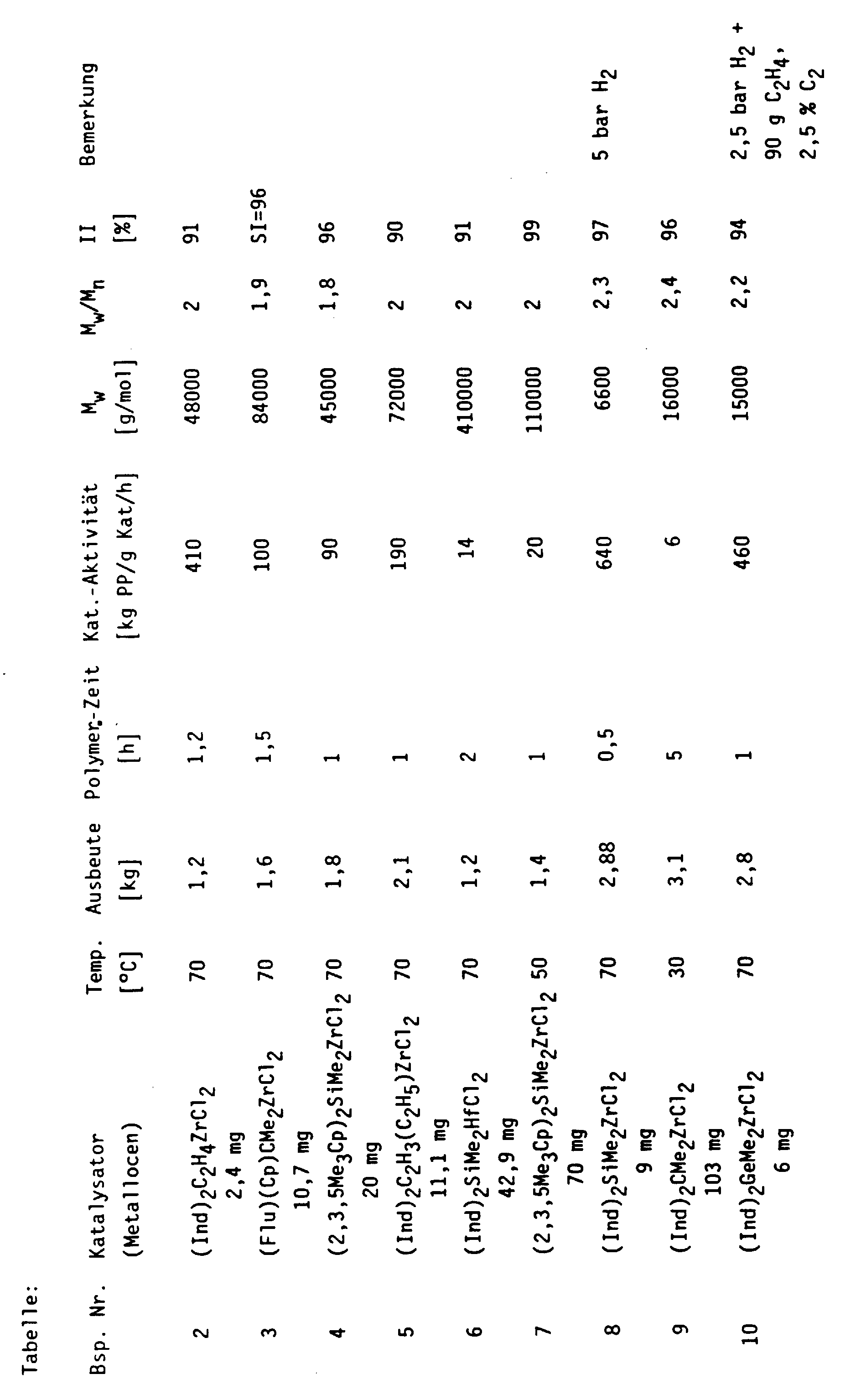

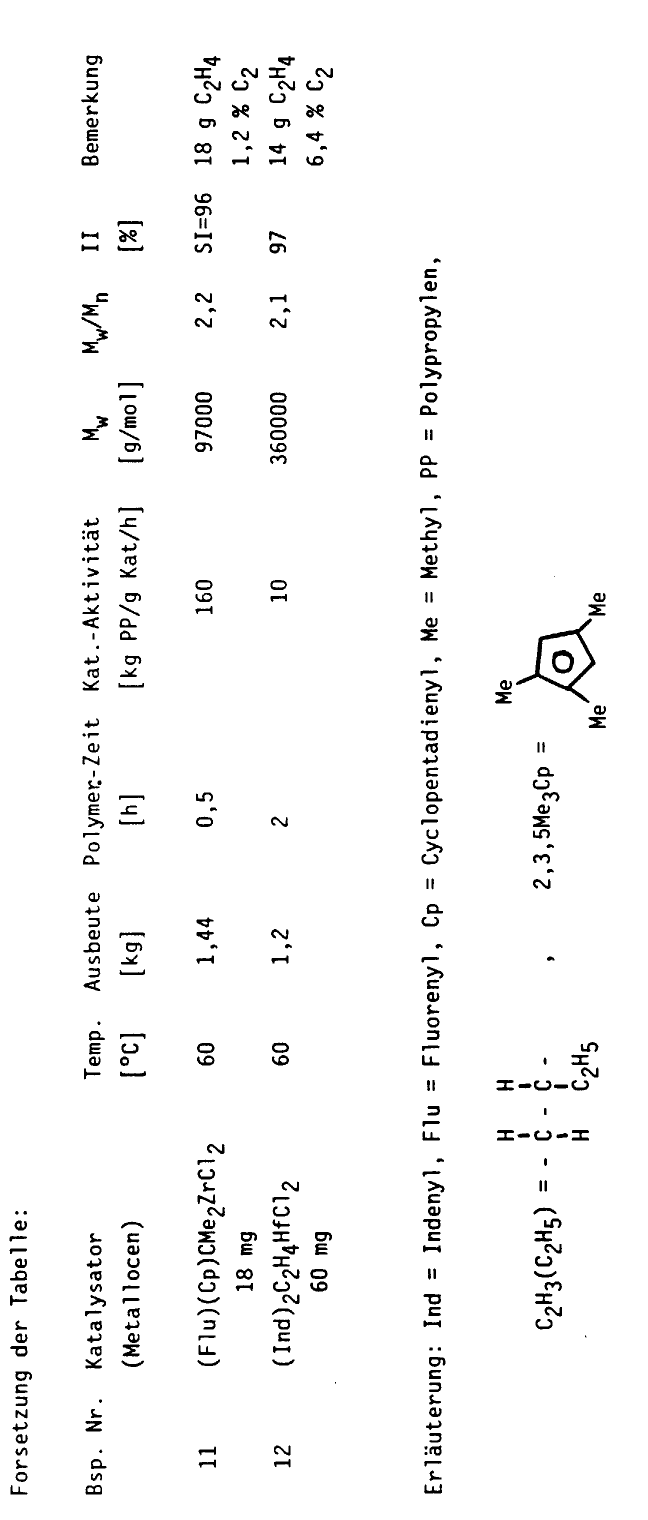

### Beispiel 13

Ein trockener 16 dm³ Reaktor wurde mit Stickstoff gespült und mit 10 dm³ flüssigem Propylen befüllt. Dann wurden 30 cm³ Isobutyl-methyl-aluminoxan, gelöst in Heptan (entsprechend 40 mmol Al, mittlerer Oligomerisierungsgrad n = 20), zugegeben und der Ansatz bei 30°C 15 Minuten gerührt.

Parallel dazu wurden 10,4 mg (0,024 mol) Dimethylmethylen (9-fluorenyl)(cyclopentadienyl)zirkondichlorid in 15 cm³ Isobutyl-methyl-aluminoxan (20 mmol Al) gelöst, durch 15 minütiges Stehenlassen voraktiviert und dann in den Kessel gegeben. Bei 70 °C Polymerisationstemperatur wurde zunächst 30 Minuten polymerisiert (1. Stufe, Polymer 1), dann wurde die Polymerisationstemperatur auf 50 °C abgesenkt. Durch Aufdrücken von Ethylen wurde ein Absolutdruck von 31 bar eingestellt. Während der 30-minütigen Polymerisation wurde dieser Druck durch Nachdosieren von Ethylen konstant gehalten (2. Stufe, Polymer 2). Es wurden 0,75 kg Polymer mit einem MFI 230/5 von 135 dg min⁻¹ und einer VZ von 83 cm³/g erhalten. Der Ethylengehalt des Polymers betrug 17,4 Gew.-%. Smp. = 124/134 °C, Kristp = 84 °C, T_{g} = -59,5 °C und 3,7 °C (zwei Glasübergänge, wobei der höhere Wert der syndiotaktischen Homopolymermatrix (Polymer 1) und der niedrigere Wert dem syndiotaktischen Copolymerkautschuk (Polymer 2) zugeordnet werden kann).
Der syndiotaktische Index des Polypropylenanteils betrug 94,7 %. Im Polymer 2 war das Ethylen zu 35,4 % isoliert (n_{PE}=1), zu 8,3 % mit n_{PE}=2 und zu 65,3 % blockartig (n_{PE}≧3) eingebaut, die Polypropylenblöcke hatten einen syndiotaktischen Aufbau.

### Beispiel 14

Ein trockener Kessel mit 16 dm³ Inhalt wurde mit Stickstoff gespült und mit 10 dm³ flüssigem Propylen befüllt. Dann wurden 30 cm³ Isobutyl-methyl-aluminoxan, gelöst in Heptan (= RMAO, entsprechend 40 mmol Al, mittlerer Oligomerisierungsgrad n = 20), zugegeben und der Ansatz bei 30°C 15 min gerührt. Parallel dazu wurden 85,6 mg (0,160 mmol) rac-Dimethylsilylbisindenylhafniumdichlorid in 15 cm³ RMAO-Lösung (= 20 mmol Al) gelöst und durch 15 minütiges Stehenlassen voraktiviert.
Die Lösung wurde dann in den Kessel gegeben. Das Polymerisationssystem wurde auf eine Temperatur von 60 °C aufgeheizt, 5 h bei dieser Temperatur gehalten und innerhalb von 10 min auf 50 °C abgekühlt. Es wurde Ethylen in die Suspension eingeleitet, bis der Siededruck des Monomergemisches auf 35 bar gestiegen war. Dieser Druck wurde während der restlichen 60 min Reaktionszeit durch Nachspeisen von Ethylen aufrechterhalten.
Man erhielt 1,40 kg Blockcopolymer mit einem MFI 230/5 von 4,5 dg min⁻¹. Das Polymer besaß eine VZ von 320 cm³/g. 12,9 Gew.-% des Polymeren waren durch Polymerisation von Ethylen entstanden. Durch Umkristallisation aus dem Benzingemisch wurden 60 % kristallisierbare Anteile, bezogen auf das gesamte Polymer, mit einer VZ von 282 cm³/g erhalten. Aus der Mutterlauge erhielt man durch Fällen mit Aceton 40 %, bezogen auf das Blockcopolymer, einer kautschukartigen Masse mit 32 Gew.-% Ethylengehalt und einer VZ von 364 cm³/g.

Die Versuchsergebnisse zeigen, daß trotz eines sterisch anspruchsvolleren Cokatalysators, der gegenüber dem Stand der Technik ein deutlich anderes Lösungsverhalten zeigt, bei hoher Polymerqualität überraschenderweise kein Aktivitätsverlust des Katalysators zu beobachten ist.

## Patentansprüche (Patentansprüche für folgende(n) Vertragsstaat(en): AT, BE, CH, LI, DE, FR, GB, GR, IT, NL, SE)

1. Verfahren zur Herstellung eines Polyolefins durch Homo- oder Copolymerisation eines Olefins der Formel R^{a}-CH=CH-R^{b} worin R^{a} und R^{b} gleich oder verschieden sind und ein Wasserstoffatom oder einen C₁-C₁₄-Alkylrest bedeuten oder R^{a} und R^{b} mit dem sie verbindenden C-Atomen einen Ring mit 4 bis 28 C-Atomen bilden, bei einer Temperatur von 0°C bis 150°C, bei einem Druck von 0,5 bis 100 bar, in Lösung, in Suspension oder in der Gasphase, in Gegenwart eines Katalysators, welcher aus einem Metallocen und einem Aluminoxan besteht, dadurch gekennzeichnet, daß das Aluminoxan eine Verbindung der Formel (I) 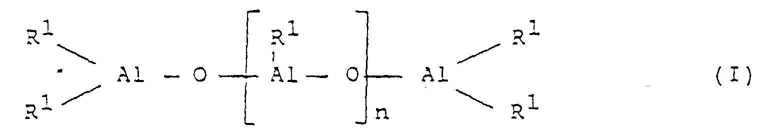 für den linearen Typ und/oder der Formel (II) 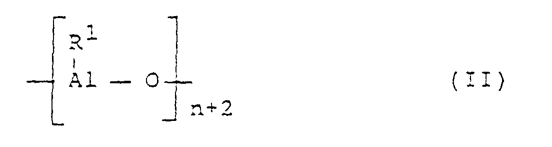 für den cyclischen Typ ist, wobei in den Formeln (I) und (II) R¹ Methyl oder iso-Butyl bedeutet und n eine ganze Zahl von 2 bis 50 ist, wobei 3 bis 12 % der Reste R¹ iso-Butyl sind.

2. Verwendung eines Aluminoxans der Formel (I) 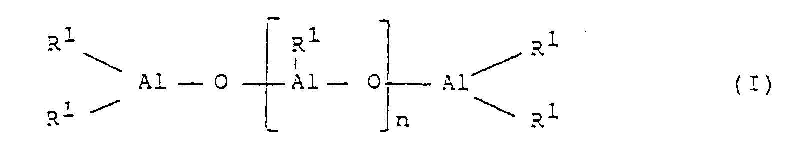 für den linearen Typ und/oder der Formel (II) 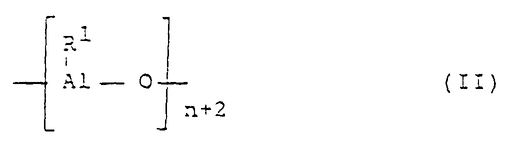 für den cyclischen Typ, wobei in den Formeln (I) und (II) R¹ Methyl oder iso-Butyl bedeutet und n eine ganze Zahl von 2 bis 50 ist, wobei 3 bis 12 % der Reste R¹ iso-Butyl sind, zur Homo- oder Copolymerisation von Olefinen gemäß Anspruch 1.

3. Aluminoxan der Formel (I) 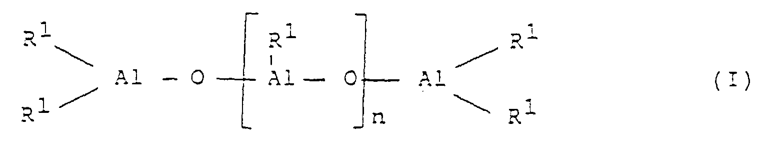 für den linearen Typ und/oder der Formel (II) 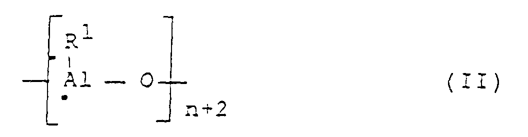 für den cyclischen Typ ist, wobei in den Formeln (I) und (II) R¹ Methyl oder iso-Butyl bedeutet und n eine ganze Zahl von 2 bis 50 ist, wobei 3 bis 12 % der Reste R¹ iso-Butyl sind.

## Patentansprüche (Patentansprüche für folgende(n) Vertragsstaat(en): ES)

1. Verfahren zur Herstellung eines Polyolefins durch Homo- oder Copolymerisation eines Olefins der Formel R^{a}-CH=CH-R^{b}, worin R^{a} und R^{b} gleich oder verschieden sind und ein Wasserstoffatom oder einen C₁-C₁₄-Alkylrest bedeuten oder R^{a} und R^{b} mit dem sie verbindenden C-Atom einen Ring mit 4 bis 28 C-Atomen bilden, bei einer Temperatur von 0°C bis 150°C, bei einem Druck von 0,5 bis 100 bar, in Lösung, in Suspension oder in der Gasphase, in Gegenwart eines Katalysators, welcher aus einem Metallocen und einem Aluminoxan besteht, dadurch gekennzeichnet, daß das Aluminoxan eine Verbindung der Formel (I) 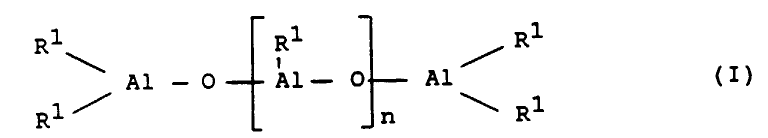 für den linearen Typ und/oder der Formel (II) 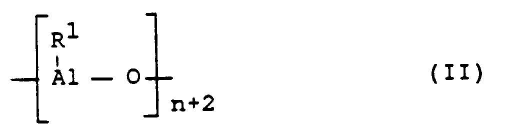 für den cyclischen Typ ist, wobei in den Formeln (I) und (II) R¹ Methyl oder iso-Butyl bedeutet und n eine ganze Zahl von 2 bis 50 ist, wobei 3 bis 12 % der Reste R¹ iso-Butyl sind.

2. Verwendung eines Aluminoxans der Formel (I) 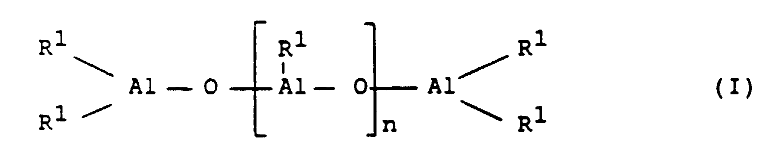 für den linearen Typ und/oder der Formel (II) 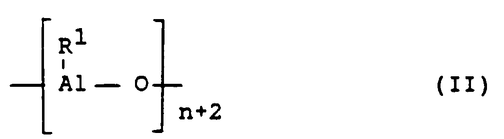 für den cyclischen Typ, wobei in den Formeln (I) und (II) R¹ Methyl oder iso-Butyl bedeutet und n eine ganze Zahl von 2 bis 50 ist, wobei 3 bis 12 % der Reste R¹ iso-Butyl sind, zur Homo- oder Copolymerisation von Olefinen gemäß Anspruch 1.

3. Verfahren zur Herstellung eines Aluminoxans der Formel (I) 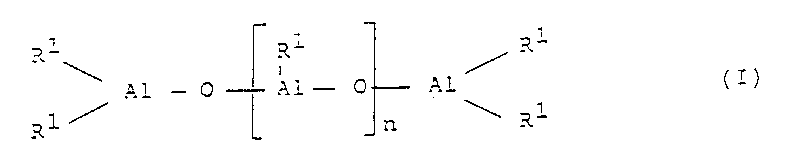 für den linearen Typ und/oder der Formel (II) 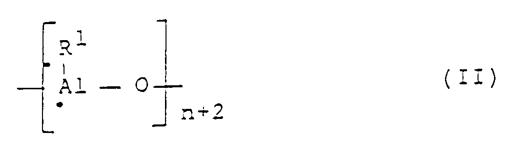 für den cyclischen Typ ist, wobei in den Formeln (I) und (II) R¹ Methyl oder iso-Butyl bedeutet und n eine ganze Zahl von 2 bis 50 ist, wobei 3 bis 12 % der Reste R¹ iso-Butyl sind.

## Claims (Claims for the following Contracting State(s): AT, BE, CH, LI, DE, FR, GB, GR, IT, NL, SE)

1. A process for the preparation of a polyolefin by homopolymerization or copolymerization of an olefin of the formula R^{a}-CH=CH-R^{b}, in which R^{a} and R^{b} are identical or different and are a hydrogen atom or a C₁-C₁₄-alkyl radical, or R^{a} and R^{b}, together with the carbon atom which links them, form a ring having 4 to 28 carbon atoms, at a temperature of 0°C to 150°C, under a pressure of 0.5 to 100 bar, in solution, in suspension or in the gas phase, in the presence of a catalyst which comprises a metallocene and an aluminoxane, wherein the aluminoxane is a compound of the formula (I) 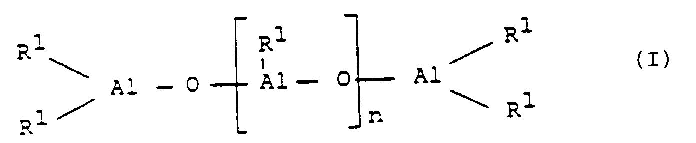 for the linear type and/or of the formula (II) 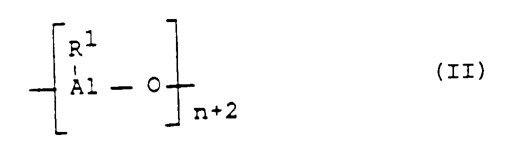 for the cyclic type where, in the formulae (I) and (II), R¹ is methyl or isobutyl and n is an integer from 2 to 50, 3 to 12% of the radicals R¹ being isobutyl.

2. The use of an aluminoxane of the formula (I) 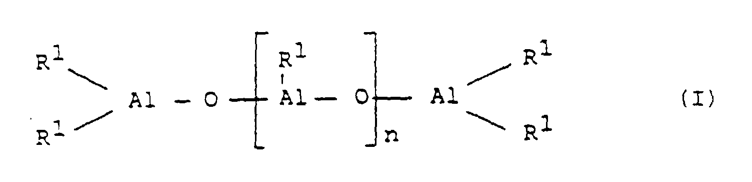 for the linear type and/or of the formula (II) 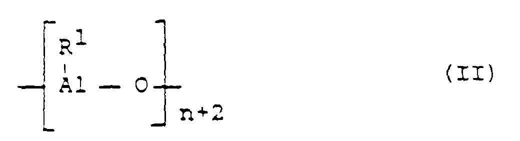 for the cyclic type where, in the formulae (I) and (II), R¹ is methyl or isobutyl and n is an integer from 2 to 50, 3 to 12% of the radicals R¹ being isobutyl, for the homopolymerization or copolymerization of olefins as claimed in claim 1.

3. An aluminoxane of the formula (I) 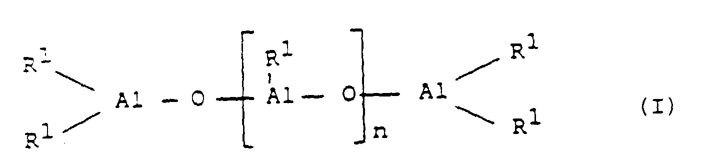 for the linear type and/or of the formula (II) 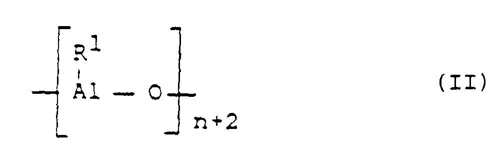 for the cyclic type where, in the formulae (I) and (II), R¹ is methyl or isobutyl and n is an integer from 2 to 50, 3 to 12% of the radicals R¹ being isobutyl.

## Claims (Claims for the following Contracting State(s): ES)

1. A process for the preparation of a polyolefin by homopolymerization or copolymerization of an olefin of the formula R^{a}-CH=CH-R^{b}, in which R^{a} and R^{b} are identical or different and are a hydrogen atom or a C₁-C₁₄-alkyl radical, or R^{a} and R^{b}, together with the carbon atom which links them, form a ring having 4 to 28 carbon atoms, at a temperature of 0°C to 150°C, under a pressure of 0.5 to 100 bar, in solution, in suspension or in the gas phase, in the presence of a catalyst which comprises a metallocene and an aluminoxane, wherein the aluminoxane is a compound of the formula (I) 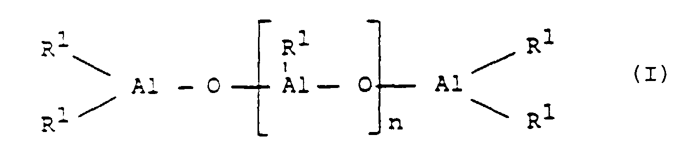 for the linear type and/or of the formula (II) 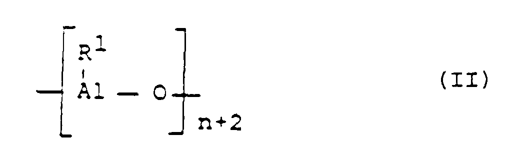 for the cyclic type where, in the formulae (I) and (II), R¹ is methyl or isobutyl and n is an integer from 2 to 50, 3 to 12% of the radicals R¹ being isobutyl.

2. The use of an aluminoxane of the formula (I) 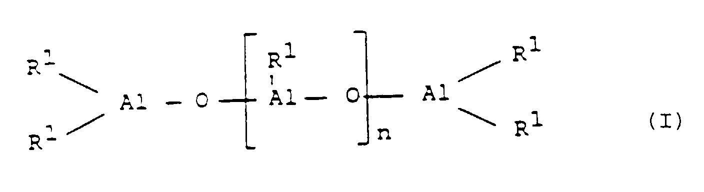 for the linear type and/or of the formula (II) 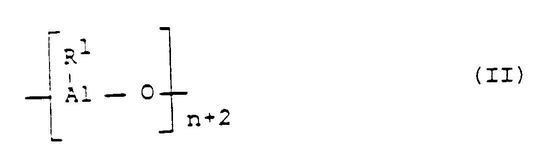 for the cyclic type where, in the formulae (I) and (II), R¹ is methyl or isobutyl and n is an integer from 2 to 50, 3 to 12% of the radicals R¹ being isobutyl, for the homopolymerization or copolymerization of olefins as claimed in claim 1.

3. A process for the preparation of an aluminoxane of the formula (I) 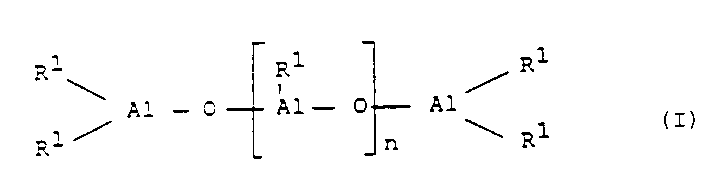 for the linear type and/or of the formula (II) 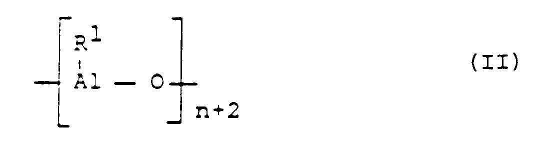 for the cyclic type where, in the formulae (I) and (II), R¹ is methyl or isobutyl and n is an integer from 2 to 50, 3 to 12% of the radicals R¹ being isobutyl.

## Revendications (Revendications pour l'(les) Etat(s) contractant(s) suivant(s): AT, BE, CH, LI, DE, FR, GB, GR, IT, NL, SE)

1. Procédé de préparation d'une polyoléfine par homopolymérisation ou copolymérisation d'une oléfine de formule R^{a}-CH=CH-R^{b}, dans laquelle R^{a} et R^{b} sont identiques ou différents et représentent un atome d'hydrogène ou un radical alkyle en C₁-C₁₄ ou R^{a} et R^{b} avec l'atome de carbone auquel ils sont liés forment un cycle de 4 à 28 atomes de carbone, à une température de 0 à 150 °C, sous une pression de 0,5 à 100 bars, en solution, en suspension ou en phase gazeuse, en présence d'un catalyseur composé d'un métallocène et d'un aluminoxane, caractérisé en ce que l'aluminoxane représente un composé de formule (I) 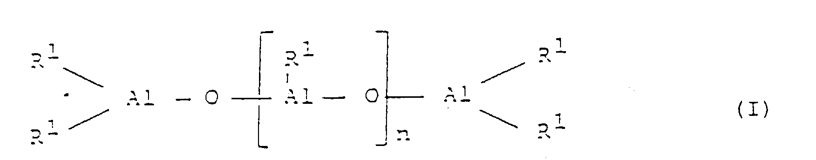 pour le type linéaire et/ou de formule (II) 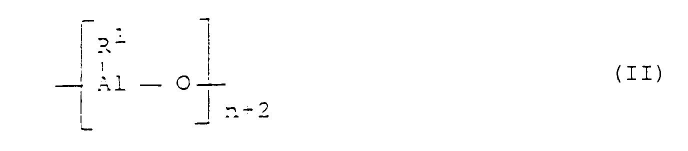 pour le type cyclique, dans les formules (I) et (II), R¹ représente méthyle ou isobutyle et n est un nombre entier de 2 à 50, où 3 à 12 % des radicaux R¹ sont isobutyle.

2. Utilisation d'un aluminoxane de formule (I) 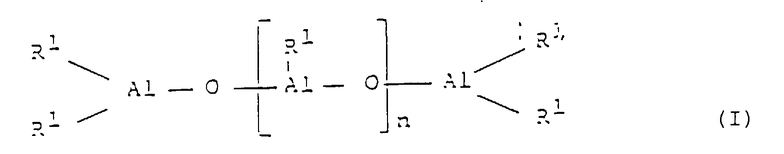 pour le type linéaire et/ou de formule (II) 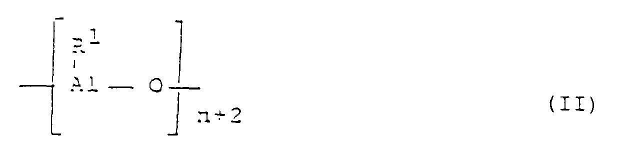 pour le type cyclique, dans les formules (I) et (II), R¹ représente méthyle ou isobutyle et n est un nombre entier de 2 à 50, 3 à 12 % des radicaux R¹ étant isobutyle, pour l'homopolymérisation ou la copolymérisation d'oléfines selon la revendication 1.

3. Aluminoxane de formule (I) 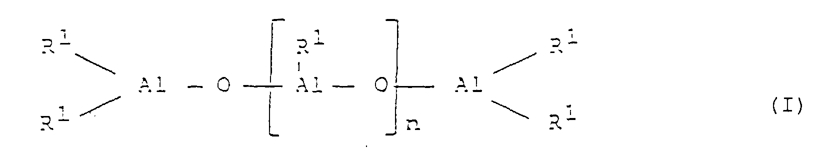 pour le type linéaire et/ou de formule (II) 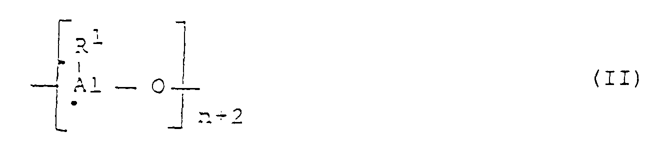 pour le type cyclique, dans les formules (I) et (II), R¹ est méthyle ou isobutyle et n un nombre entier de 2 à 50, où 3 à 12 % des radicaux R¹ sont isobutyle.

## Revendications (Revendications pour l'(les) Etat(s) contractant(s) suivant(s): ES)

1. Procédé de préparation d'une polyoléfine par homopolymérisation ou copolymérisation d'une oléfine de formule R^{a}-CH=CH-R^{b}, dans laquelle R^{a} et R^{b} sont identiques ou différents et représentent un atome d'hydrogène ou un radical alkyle en C₁-C₁₄ ou R^{a} et R^{b} avec l'atome de carbone auquel ils sont liés forment un cycle de 4 à 28 atomes de carbone, à une température de 0 à 150 °C, sous une pression de 0,5 à 100 bars, en solution, en suspension ou en phase gazeuse, en présence d'un catalyseur composé d'un métallocène et d'un aluminoxane, caractérisé en ce que l'aluminoxane représente un composé de formule (I) 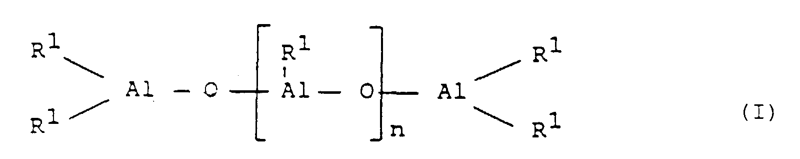 pour le type linéaire et/ou de formule (II) 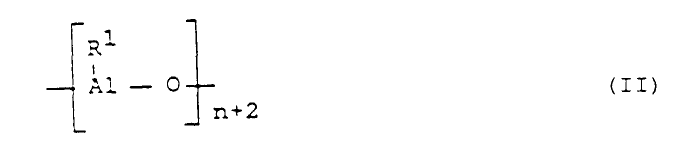 pour le type cyclique, dans les formules (I) et (II), R¹ représente méthyle ou isobutyle et n est un nombre entier de 2 à 50, où 3 à 12 % des radicaux R¹ sont isobutyle.

2. Utilisation d'un aluminoxane de formule (I) 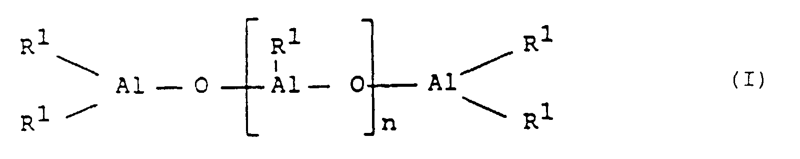 pour le type linéaire et/ou de formule (II) 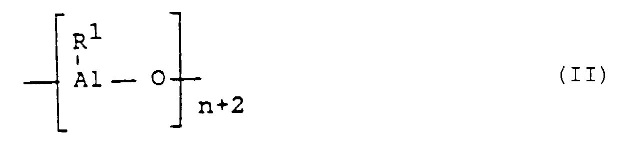 pour le type cyclique, dans les formules (I) et (II), R¹ représente méthyle ou isobutyle et n est un nombre entier de 2 à 50, où 3 à 12 % des radicaux R¹ sont isobutyle, pour l'homopolymérisation ou la copolymérisation d'oléfines selon la revendication 1.

3. Procédé pour la préparation d'un aluminoxane de formule (I) 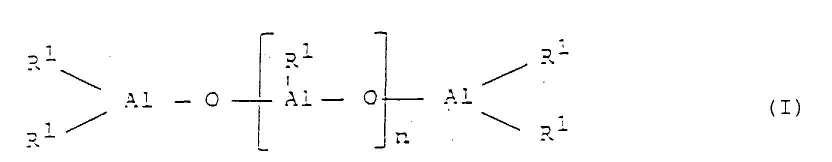 pour le type linéaire et/ou de formule (II) 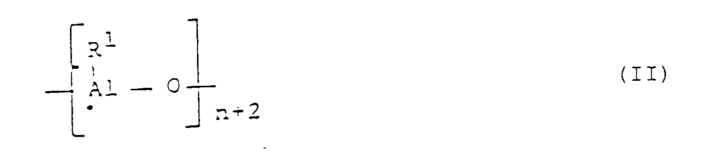 pour le type cyclique, dans les formules (I) et (II), R¹ est méthyle ou isobutyle et n un nombre entier de 2 à 50, où 3 à 12 % des radicaux R¹ sont isobutyle.
